# EUROPÄISCHE PATENTSCHRIFT

(11) **EP 2 492 043 B1**
(45) Veröffentlichungstag und Bekanntmachung des Hinweises auf die Patenterteilung: **24.02.2016**
(21) Anmeldenummer: 12157264.8
(22) Anmeldetag: 28.02.2012
(51) Int. Cl.: B23K 37/02, B23K 37/053, B23K 26/28, B23K 26/10, B23K 26/24, B23K 9/028

(54) **Verfahren und Fügeeinrichtung**
Joint method and device
Méthode et dispositif d'assemblage

(30) Priorität: 28.02.2011 DE 202011000456 U
(43) Veröffentlichungstag der Anmeldung: 29.08.2012
(73) Patentinhaber: KUKA Systems GmbH, 86165 Augsburg (DE)
(72) Erfinder: Henneke, Thomas, 86971 Peiting (DE); Mocker, Sebastian, 86152 Augsburg (DE); Dobkowitz, Thomas, 86157 Augsburg (DE)
(74) Vertreter: Ernicke, Klaus Stefan

(56) Entgegenhaltungen:
- WO-A1-2007/055643
- DE-A1- 2 708 040
- DE-A1-102004 039 006
- JP-A- 55 126 393
- JP-A- 63 154 281
- US-A1- 2004 118 897

## Beschreibung

Die Erfindung betrifft eine Fügeeinrichtung mit den Merkmalen im Oberbegriff des Hauptanspruchs, wie z.B. aus der US-A1-2004/0118897 bekannt.

Bei der Herstellung von Wärmetauschern besteht das Problem, Bodenplatten mit durchgesteckten Rohren sicher zu verbinden, insbesondere wenn eine dichte ringförmige Fügeverbindung zwischen dem Rohrmantel und dem Öffnungsrand entstehen soll. In der Praxis werden diese Werkstückteile von Hand und mit Lichtbogen geschweißt, was zeit- und kostenaufwändig ist. Ähnliche Fügeprobleme bestehen auch bei anderen Arten von Werkstücken.

Es ist daher Aufgabe der Erfindung, eine bessere Fügetechnik für derartige Werkstücke aufzuzeigen.

Die Erfindung löst diese Aufgabe mit den Merkmalen im Hauptanspruch.

Die beanspruchte Fügetechnik erlaubt eine Mechanisierung und Automatisierung beim stofflichen oder stoffschlüssigen Fügen von hohlen und insbesondere rohrförmigen Werkstückteilen mit anderen Werkstückteilen an einer Durchstecköffnung. Bei dem Fügeprozess wird eine stoffliche oder stoffschlüssige Fügeverbindung, z.B. eine Schweißverbindung, geschaffen. Hierbei können dichte ringförmige Fügestellen gebildet werden. Die Fügetechnik lässt sich mit Erfolg bei den vorgenannten Wärmetauschern oder bei anderen Werkstücken der genannten Art einsetzen. Der Herstellungs- und Fügeprozess kann verkürzt, verbessert und verbilligt werden. Insbesondere die Fügepräzision wird wesentlich gesteigert.

Die beanspruchte Fügetechnik erlaubt es ferner, den Energieeinsatz und insbesondere den Energie- und Wärmeeintrag an den Fügestellen zu minimieren. Es können Fügeprozesse mit einem energiereichen dünnen Strahl, insbesondere einem Laserstrahl, Elektronenstrahl oder dgl. eingesetzt werden. Außerdem kann auf Schweißzusatzmittel verzichtet werden.

Die Fügepräzision kann durch eine Verformung des hohlen Werkstückteils und dessen dichtes Anpressen an den umgebenden Öffnungsrand des anderen Werkstückteils verbessert werden. Ein an der Durchsteckstelle bestehender Spalt wird dadurch aufgehoben oder zumindest soweit minimiert, dass auch mit einem Laserstrahl oder dgl. ohne ggf. abschmelzende Zusatzstoffe gearbeitet werden kann.

Die Fügeeinrichtung ist z.B. als Schweißeinrichtung ausgebildet, kann aber auch auf andere stoffliche oder stoffschlüssige Verbindungs- oder Fügeprozesse, z.B. Kleben, Löten oder dgl. adaptiert werden.

Sie weist eine Positioniereinrichtung auf, mit der vorzugsweise durch formschlüssigen Eingriff am hohlen Werkstückteil eine exakte Positionierung und Ausrichtung gegenüber den zu fügenden Werkstückteilen erreicht werden kann. Hierbei wird auch ein Fügewerkzeug, vorzugsweise ein Laserschweißwerkzeug, exakt gegenüber dem hohlen Werkstückteil und der vorgesehenen Fügestelle positioniert und ausgerichtet. Es kann dann mit mit seiner Wirkstelle entlang einer definierten Bahn und die ringförmige Fügestelle bewegt werden und den Fügeprozess durchführen.

Besondere Vorteile bestehen bei hohlen und insbesondere rohrartigen Werkstücken mit einem kreisrunden Querschnitt. Die Bewegung des Fügewerkzeugs kann hierbei eine kreisförmige Bewegung um eine zentrale Positionierachse sein. Diese Drehbewegung kann von einer Handhabungseinrichtung, insbesondere einem mehrachsigen Manipulator oder Roboter und von dessen Abtriebsachse ausgeführt werden. Die Fügeeinrichtung kann dadurch auf eine eigene Antriebstechnik für das Fügewerkzeug verzichten. Bei dieser Drehbewegung ist es günstig, wenn die Positioniereinrichtung sich auch am hohlen Werkstückteil fixiert.

Bei dieser Fixierung kann die erwähnte Verformung, insbesondere Aufweitung, des hohlen Werkstückteils erfolgen. Die Positioniereinrichtung weist hierfür eine Verformungseinrichtung auf, die vorzugsweise als Aufweiteinrichtung ausgebildet ist.

Die Positioniereinrichtung kann außerdem eine mitgeführte Vermessungseinrichtung aufweisen. Alternativ oder zusätzlich kann eine externe und z.B. stationäre Vermessungseinrichtung vorhanden sein. Mit der Vermessungseinrichtung kann die Lage und Ausrichtung des z.B. plattenförmigen Werkstückteils ermittelt werden, wobei danach die Positionierachse exakt senkrecht zu dieser Werkstückoberfläche ausgerichtet werden kann. Mit dem Vermessungsergebnis kann auch die Handhabungseinrichtung das Fügewerkzeug exakt in Richtung der Positionierachse gegenüber der Fügestelle zustellen.

Die Lage und Verteilung der hohlen Werkstückteile kann ebenfalls mit der Vermessungseinrichtung ermittelt sein. Sie kann alternativ vorbekannt und programmiert sein, wobei die Positioniereinrichtung mit einem Zentriermittel in das hohle Werkstückteil eingreift und für eine seitliche Ausrichtung und exakte Positionierung sorgt.

Die Fügeeinrichtung kann eine Medienversorgung aufweisen, wobei vorzugsweise von außen zugeführte Lichtleitkabel und Versorgungsleitung(en) angeschlossen und bewegungsfreundlich geführt werden können. Hierfür kann ein trommelartiger Leitungsträger vorhanden sein, der bei den Dreh- oder Umlaufbewegungen des Fügewerkzeugs die besagten Leitungen auf- und abwickelt. Die besagten Dreh- und Umlaufbewegungen sind dabei vorzugsweise reversierend.

Das Zentriermittel der Positioniereinrichtung kann zugleich ein Element der Verformungs- oder Aufweiteinrichtung darstellen und kann insbesondere von einem Spreizdorn und einer Spreizkrone gebildet sein. Die Ausbildung der Aufweiteinrichtung mit einer hohlen Spreizkrone und einem darin axial beweglichen Spreizdorn und einem konischen Spannbereich hat den Vorteil, dass sehr hohe Spreiz-, Spann- und Verformungskräfte aufgebracht werden können. Dank eines kleinen Keilwinkels und einer entsprechenden Kraftumlenkung kann eine Stelleinrichtung zur Erzeugung des Spreizhubs eingesetzt werden, die klein baut und mit einer geringen Leistung auskommt.

In den Unteransprüchen sind weitere vorteilhafte Ausgestaltungen der Erfindung angegeben.

Die Erfindung ist in den Zeichnungen beispielhaft und schematisch dargestellt. Im Einzelnen zeigen:
- Figur 1:: eine Bearbeitungseinrichtung für Werkstücke mit mehrachsigen Handhabungseinrichtungen und einer Fügeeinrichtung,
- Figur 2:: eine perspektivische und vergrößerte Darstellung der Fügeeinrichtung,
- Figur 3:: eine Seitenansicht der Fügeeinrichtung an einem Werkstück,
- Figur 4:: einen Schnitt durch die Fügeeinrichtung mit einem Fügewerkzeug und einer Aufweiteinrichtung an der Fügestelle und
- Figur 5 und 6:: vergrößerte Detaildarstellungen des Bereichs V von Figur 4 um die Fügestelle mit verschiedenen Betriebspositionen der Aufweiteinrichtung.

Die Erfindung betrifft eine Fügeeinrichtung (4) und ein Fügeverfahren zum stofflichen oder stoffschlüssigen Verbinden von Werkstücken (2). Sie betrifft außerdem eine Bearbeitungseinrichtung (1), die mit einer solchen Fügeeinrichtung (4) ausgerüstet ist.

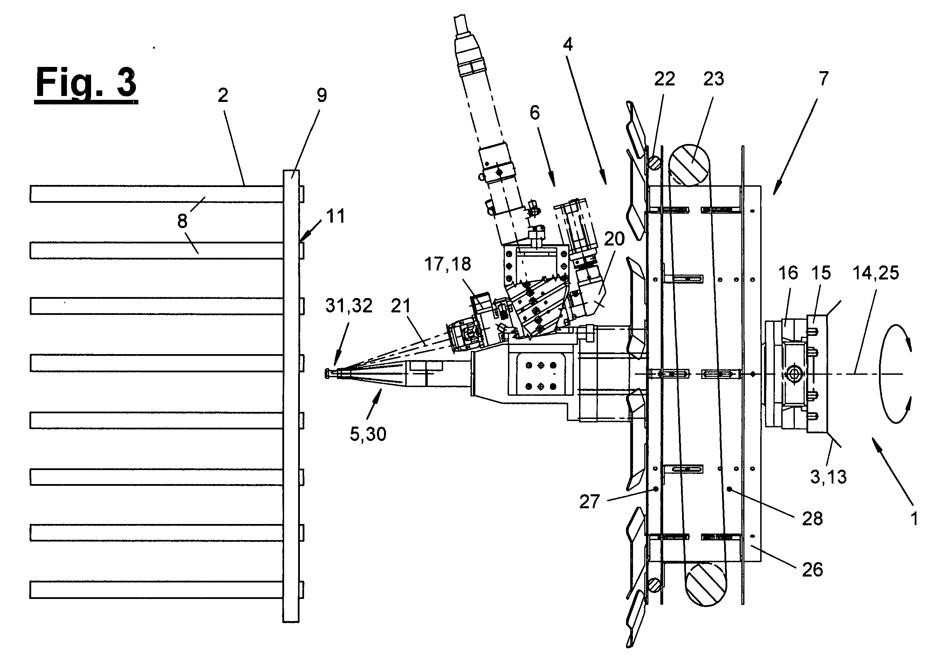

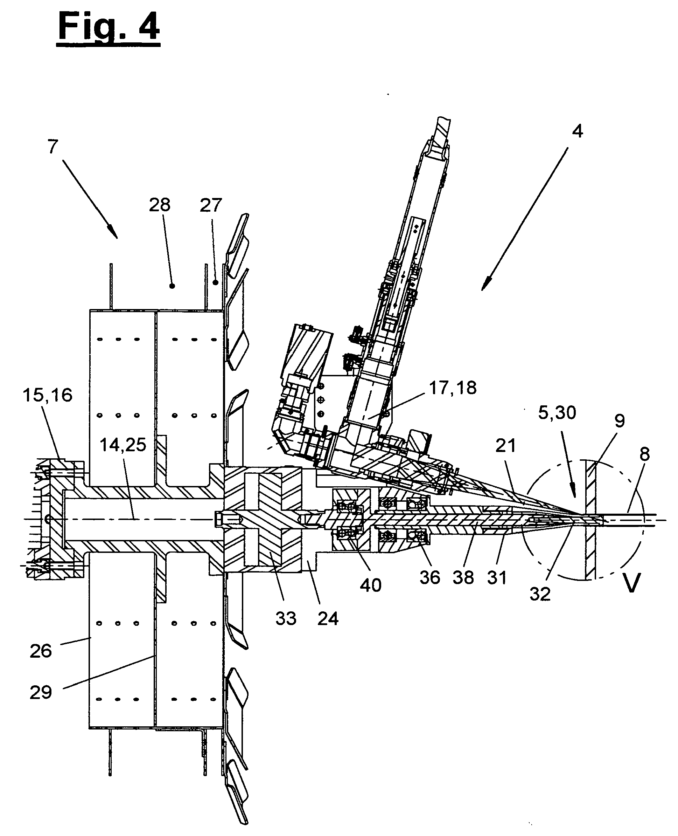

Die Bearbeitungseinrichtung (1) weist eine mehrachsig bewegliche Handhabungseinrichtung (3) auf, an der die Fügeeinrichtung (4) mittels eines in Figur 3 und 4 dargestellten Anschlusses (16) temporär oder dauerhaft befestigt ist. An dieser Stelle kann eine steuerbare Wechselkupplung zum automatischen Aufnehmen oder Abgeben der Fügeeinrichtung (4) angeordnet sein.

Die Handhabungseinrichtung (3) kann als mehrachsiger Manipulator, insbesondere als mehrachsiger und programmierbarer Roboter ausgebildet sein. Sie kann mehrere translatorische und/oder rotatorische Achsen in beliebiger Zahl und Konfiguration aufweisen. Im gezeigten Ausführungsbeispiel ist der Roboter (12) als Gelenkarmroboter ausgebildet und hat z.B. fünf oder sechs rotatorische Achsen. Er besitzt außerdem eine programmierbare Robotersteuerung (nicht dargestellt), mit der die Fügeeinrichtung (4) per Leitung oder drahtlos zur Übermittlung von Signalen und Steuerbefehlen verbunden sein kann.

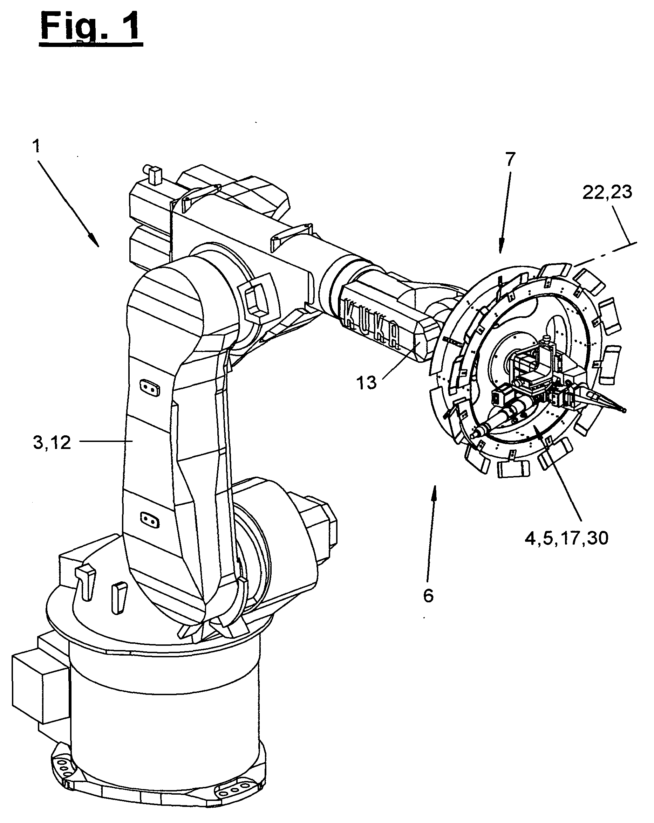

Die Handhabungseinrichtung (3), insbesondere der Manipulator oder Roboter (12), besitzt am Ende auch eine Hand (13), die ein Abtriebselement (15) und mindestens eine Bewegungsachse aufweist. Dies kann eine Handachse oder Abtriebsachse (14) sein, um die das z.B. als Flansch ausgebildete Abtriebselement (15) dreht. Figur 3 zeigt diese Anordnung. In dem in Figur 1 gezeigten Ausführungsbeispiel eines Gelenkarmroboters (12) ist die Roboterhand (13) mehrachsig ausgebildet und besitzt außer der Handachse oder Abtriebsachse (14) eine oder zwei weitere Schwenkachsen, wobei diese zwei oder drei Handachsen vorzugsweise einander in einem Punkt kreuzen und schneiden.

Das Abtriebselement (15) ist mit dem Anschluss (16) durch eine Verschraubung oder dgl. direkt oder mittelbar über die erwähnte Wechselkupplung verbunden. Der Anschluss (16) kann eine Mittelachse haben, die mit der Abtriebsachse (14) zusammenfallen kann.

Wie Figur 3 andeutungsweise zeigt, kann die Bearbeitungseinrichtung (1) und die Fügeeinrichtung (4) zum Fügen von mehrteiligen Werkstücken (2) eingesetzt werden. Ein solches Werkstück (2) kann z.B. ein Wärmetauscher sein, der aus mehreren hohlen Werkstückteilen (8) besteht, die durch einen oder mehrere plattenförmige und einen Boden bildende Werkstückteile (9) durchgesteckt sind und an der Durchsteckstelle gefügt werden sollen. Das Werkstück (2) kann auch eine beliebig andere Ausbildung haben und anderen Zwecken dienen. Das Werkstückteil (9) kann alternativ eine beliebige andere Form aufweisen und kann ein beliebiger Körper sein.

Die Werkstückteile (8,9) können aus beliebigen Werkstoffen, vorzugsweise Metall, bestehen. Im gezeigten Ausführungsbeispiel eines Wärmetauschers bestehen die Werkstückteile (8,9) aus Stahl, insbesondere aus Edelstahl. Alternativ können der oder die Werkstoffe ein Leichtmetall oder Buntmetall sein. Die Werkstückteile (8,9) können auch aus unterschiedlichen Werkstoffen bestehen. Weitere geeignete Werkstoffe sind z.B. Kunststoffe, Verbundwerkstoffe oder dgl.

Ein hohles Werkstückteil (8) ist z.B. rohrförmig ausgebildet und kann eine beliebige Querschnittsform haben, die nicht rotationssymmetrisch sein muss und z.B. oval oder prismatisch ist. Im gezeigten und bevorzugten Ausführungsbeispiel sind die Rohrquerschnitte kreisförmig. Die Durchgangs- oder Durchstecköffnung(en) im anderen Werkstückteil oder Boden (9) hat eine der äußeren Mantelform des hohlen Werkstückteils (8) entsprechende Kontur und besitzen ein das Durchstecken ermöglichendes Übermaß, wobei z.B. Spiel oder eine leichte Klemmpassung bestehen. Durch diese Maßunterschiede und auch durch Toleranzen in Form und Abmessung kann ein Spalt zwischen dem Mantel des hohlen Werkstückteils (8) und dem umgebenden Öffnungsrand des anderen Werkstückteils (9) entstehen.

Das oder die hohlen Werkstückteil(e) (8) schließen bündig mit der Außenseite bzw. Oberfläche des anderen Werkstückteils (9) ab oder stehen gemäß Figur 3 ein kleines Stück darüber hinaus. Das Maß eines etwaigen Überstandes kann toleranzbehaftet sein. Die bevorzugt ringförmige Füge- oder Verbindungsstelle (11) zwischen den Werkstückteilen (8,9) befindet sich an der Übergangs- oder Kontaktstelle zwischen dem Mantel eines Werkstückteils (8) und dem umgebenden Öffnungsrand des anderen Werkstückteils (9).

Der stoffliche oder stoffschlüssige Fügeprozess kann von beliebiger Art sein. Vorzugsweise kommt ein Schweißprozess zum Einsatz. Hierbei wird vorzugsweise mit einem energiereichen Strahl (21) gearbeitet, der z.B. ein Laserstrahl oder ein Elektronenstrahl sein kann, und der schräg auf die Fügestelle (11) gerichtet ist. Alternativ oder zusätzlich kann mit einem Lichtbogen oder mit einer anderen Schweißtechnik geschweißt werden. Alternative Fügeprozesse sind z.B. Kleben, Löten oder dgl., wobei stoffliche oder stoffschlüssige Fügeverbindungen, z.B. Klebe- oder Lötverbindungen, hergestellt werden. Die Fügeeinrichtung (4) hat hierfür ein geeignetes Fügewerkzeug (17). Im gezeigten und bevorzugten Ausführungsbeispiel ist sie als Schweißeinrichtung, insbesondere als Laserschweißeinrichtung, ausgebildet und besitzt ein Schweißwerkzeug (17), insbesondere Laserschweißwerkzeug.

Die Bearbeitungseinrichtung (1) und/oder die Fügeeinrichtung (4) kann eine Vermessungseinrichtung (6) (nicht dargestellt) aufweisen, die zur Vermessung des Werkstücks (2) dient. Hierbei kann insbesondere das z.B. plattenartige Werkstückteil (9) in seiner Lage und Ausrichtung erfasst werden, wobei die Daten zur entsprechenden Ausrichtung der Handhabungseinrichtung (3) benutzt werden. Die Vermessungseinrichtung (6) kann z.B. mit der Robotersteuerung verbunden sein, in der ein Bahnprogramm für die Roboterbewegungen gespeichert ist, welches von der Robotersteuerung an die erfassten IstWerte von Lage und Ausrichtung des Werkstückteils (9) angepasst wird. Mit der Vermessungseinrichtung (6) können auch ein oder mehrere hohle Werkstückteile (8) nach Lage, Ausrichtung, Form, Größe, Überstand und dgl. vermessen werden. Auf diesen Vermessungsschritt kann ggf. verzichtet werden. Die betreffenden Daten können bei einer exakten Vorbereitung der Werkstücketeile (8,9) vorgegeben und in der Robotersteuerung gespeichert sein.

Die Vermessungseinrichtung (6) kann von beliebiger Art und Ausbildung sein. Sie kann insbesondere einteilig oder mehrteilig sein. Eine Vermessungseinrichtung (6) oder ein Teil hiervon kann an der Handhabungseinrichtung (3), insbesondere an der Fügeeinrichtung (4) angeordnet sein. Dies kann z.B. ein taktiler oder abstandsmessender Sensor sein, der drei oder mehr Punkte an der Oberfläche des Werkstückteils (9) erfasst. Alternativ oder zusätzlich kann an der Fügeeinrichtung (4) ein optisches Messsystem, z.B. eine Kamera mit einer Bildauswertung, ein Lichtschnittsensor oder dgl. angeordnet sein.

Alternativ oder zusätzlich kann eine Vermessungseinrichtung (6) oder ein Teil hiervon außerhalb der Handhabungseinrichtung (3) und z.B. stationär angeordnet sein. Dies kann z.B. ein Kamerasystem mit Bildauswertung zum Erfassen und Vermessen des Werkstücks (2) sein. Weitere mögliche Ausgestaltungen der Vermessungseinrichtung (6) sind Lasermesseinrichtungen mit Laufzeitmessung. Eine Vermessung kann außerdem optisch an mehreren Punkten nach dem Triangulationsverfahren stattfinden. Daneben sind beliebige andere Messtechniken und Ausbildungen der Vermessungseinrichtung (6) möglich.

Die Bearbeitungseinrichtung (1) und/oder die Fügeeinrichtung (4) können eine Medienversorgung (7) aufweisen. Wenn z.B. mit einem energiereichen Strahl (21) gefügt, insbesondere geschweißt oder gelötet wird, kann die Bearbeitungseinrichtung (1) eine geeignete Strahlquelle, insbesondere eine Laserstrahlquelle, aufweisen (nicht dargestellt). Dies ist z.B. ein Scheiben- oder Diodenlaser, ein Nd-YAG-Laser oder dgl.. Der energiereiche Strahl (21), insbesondere Laserstrahl, wird von der Strahlquelle der Fügeeinrichtung (4) über eine Strahlzuführung (22) zugeleitet. Dies ist im gezeigten Ausführungsbeispiel ein flexibles Lichtleitkabel. Alternativ kann eine Strahlzuführung (22) aus einem mit mehreren Gelenken versehenen Rohrsystem bestehen oder eine beliebige andere Ausgestaltung haben. In weiterer Abwandlung ist es auch möglich, eine Strahlquelle, z.B. einen Laser, an der Fügeeinrichtung (4) anzuordnen und mitzuführen.

Der Fügeeinrichtung (4) können weitere Medien oder sonstige Betriebsmittel ggf. von außen zugeführt werden. Hierfür kann eine Versorgungsleitung (23) vorhanden sein, die ggf. mehrteilig und als Leitungspaket oder Schlauchpaket ausgebildet ist. Derartige z.B. fluide Medien können z.B. Druckluft oder Hydraulik für pneumatische oder hydraulische Stell- oder Antriebsmittel sein. Ein fluides Medium kann auch ein Kühlmittel, Schutzgas, flüssiges oder pulverförmiges Schweißhilfsmittel oder dgl. sein. Betriebsmittel können Leistungsströme und/oder Signalströme bzw. -spannungen sein.

Die Fügeeinrichtung besitzt eine Positioniereinrichtung (5) und ein Fügewerkzeug (17). Die Positioniereinrichtung (5) kann am Werkstück (2), insbesondere am hohlen Werkstückteil (8), mechanisch, insbesondere formschlüssig, angreifen und das Fügewerkzeug (17) relativ zum Werkstück (2) ausrichten. Die Positioniereinrichtung (5) weist einen mit dem Anschluss (16) verbundenen Positionierkopf (24) mit einer längsgerichteten Positionierachse (25) auf, die bei der Positionierung ebenfalls gegenüber dem Werkstück (2), insbesondere dem hohlen Werkstückteil (8), ausgerichtet wird. Hierbei kann die Positionierachse (25) längs einer zentralen Längsachse des hohlen Werkstückteils (2) im Mündungsbereich ausgerichtet werden. Insbesondere können beide Achsen miteinander zur Deckung gebracht werden.

Das Fügewerkzeug (17) ist um die Positionierachse (25) bewegbar, insbesondere drehbar und kann sich dadurch mit seinem Wirkpunkt entlang der ringförmigen Fügestelle (11) bewegen. Das Fügewerkzeug (17) führt dabei eine Umlaufbewegung aus, die entsprechend der Fügestellenkontur ausgebildet ist. Wenn die Ringform der Fügestelle (11) nicht rotationssymmetrisch zur Werkstückzentralachse ist, ergibt sich eine ebenfalls nicht rotationssymmetrische Umlaufbewegung des Fügewerkzeugs (7). Im gezeigten Ausführungsbeispiel einer kreisförmigen Rohr- und Fügestellenkontur ist die Umlaufbewegung ebenfalls kreisförmig und besteht in einer Drehung um die zentrale Positionierachse (25) der Positioniereinrichtung (5).

Für diese Umlauf- oder Drehbewegung des Fügewerkzeugs (7) kann die Fügeeinrichtung (4) einen eigenen Antrieb aufweisen. Im gezeigten Ausführungsbeispiel kann auf einen solchen Zusatzantrieb verzichtet werden. Die zentrale Positionierachse (25) fluchtet über den ebenfalls zentralen Anschluss (16) mit der Abtriebsachse (14) und der Handhabungseinrichtung (3), sodass die Drehbewegung des Fügewerkzeugs (7) durch die Abtriebsdrehung um die Abtriebs- oder Handachse (14) bewirkt werden kann. In diesem Fall ist das Fügewerkzeug (7) mit dem Positionierkopf (24) und dem Anschluss (16) drehschlüssig verbunden.

Die Positioniereinrichtung (5) weist ein Zentrierelement (31,32) auf, welches in die Innenöffnung des hohlen Werkstückteils (8) bei der Zustellung eingeführt werden kann. Angleitschrägen an der Spitze des Zentrierelements erleichtern das Einführen. Etwaige Fehlstellungen und ein Seitenversatz der Fügeeinrichtung (4) können bei der in Richtung der Achsen (14,25) ausgeführten Zustellbewegung der Handhabungseinrichtung (3) ausgeglichen werden. Dies ist durch bestehende Elastizitäten oder andere Nachgiebigkeiten in den verschiedenen Bewegungsachsen der Handhabungseinrichtung (3) und in den Teilen der Fügeeinrichtung (4) möglich.

Für die Zustellung wird zuvor die Fügeeinrichtung (4) derart gegenüber dem Werkstück (2) von der Handhabungseinrichtung (3) ausgerichtet, dass die Achsen (14,25) senkrecht zur Oberfläche des Werkstückteils (9) im Fügebereich ausgerichtet werden. Hierbei werden außerdem das Abtriebselement (15) und der Anschluss (16) mit ihren Hauptebenen parallel zur besagten Oberfläche des Werkstückteils (9) ausgerichtet. Die Länge des Zustellwegs wird von der Handhabungseinrichtung (3) entsprechend der Ist-Lage dieser Oberfläche des Werkstückteils (9) bestimmt.

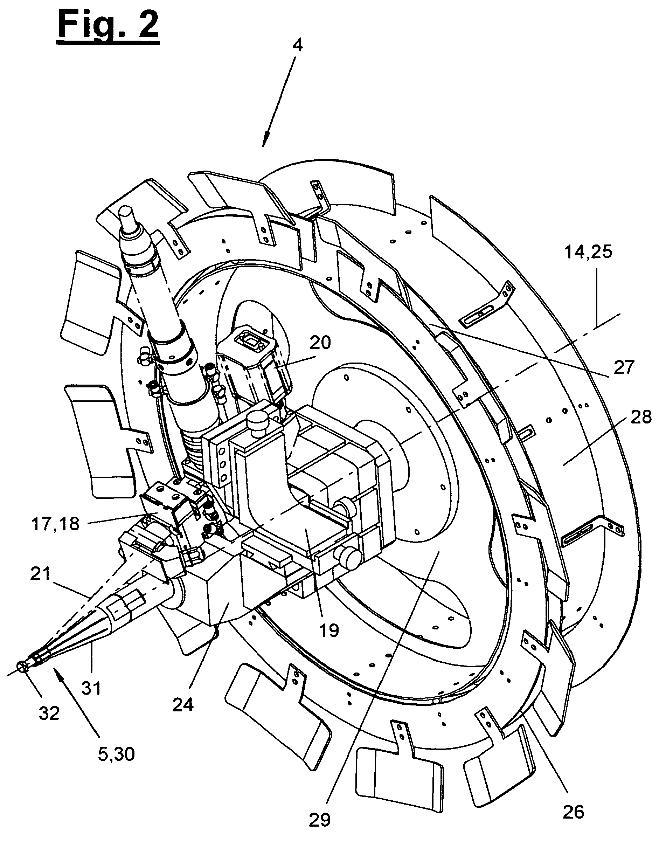

Wie Figur 2 bis 4 verdeutlichen, ist das Fügewerkzeug (17) mit seiner Wirkachse schräg zur Positionierachse (25) ausgerichtet. Der vorerwähnte Wirkpunkt des Fügewerkzeugs (17) hat dabei eine definierte und ggf. einstell- und veränderbare Position auf dieser Wirkachse. Wenn das Fügewerkzeug (17) mit einem energiereichen Strahl (21) arbeitet, kann der Strahl (21) bzw. seine Strahlachse mit der Wirkachse zusammenfallen, wobei der Wirkpunkt z.B. ein Fokuspunkt des Strahls (21) ist. Die Ausrichtung und Einstellung des Fügewerkzeugs (17) kann verändert und justiert werden. Hierfür ist eine Justiereinrichtung (19) zwischen dem Fügewerkzeug (17) und der Positioniereinrichtung (5), insbesondere deren Positionierkopf (24), angeordnet. Wie z.B. Figur 2 verdeutlicht, erlaubt die Justiereinrichtung (19) eine translatorische Verstellung des Fügewerkzeugs (17) in drei verschiedenen translatorischen Achsen und ggf. auch eine Drehverstellung um mindestens eine rotatorische Achse, um die Schrägausrichtung der Wirkachse bzw. des Strahls (21) einzustellen.

Das Fügewerkzeug (17) ist in der gezeigten Ausführungsform als Laserschweißwerkzeug ausgebildet. Es besitzt einen Schweißkopf (18), der in der gezeigten Ausführungsform als Strahlkopf zur Emission eines energiereichen Strahls (21) ausgebildet ist. Bevorzugt kommt ein Laserkopf (18) mit einem Laserstrahl (21) zum Einsatz. Der Strahlkopf oder Laserkopf (18) ist mit der Strahlzuführung (22) verbunden und weist eine Ankopplung (20) an einem halbdurchlässigen Spiegelstrahlengang auf. Hier kann ein optisches System, z.B. ein Beobachtungs- und/oder Messsystem angeschlossen werden, welches in den Strahlengang eingekoppelt und durch die Strahlaustrittsdüse auf den Wirkpunkt bzw. die Werkstückumgebung an der Auftreffstelle des Strahls (21) blickt. Ein solches optisches System kann Bestandteil der Vermessungseinrichtung (6) sein.

Der Strahlkopf oder Laserkopf (18) besitzt eine Fokussiereinrichtung zur Fokussierung des emittierten Strahls (21). Die Fokussiereinrichtung kann eine feste Brennweite haben. Sie kann alternativ eine Brennweitenverstellung aufweisen und kann insbesondere auch ein Autofokus-System haben. In diesen verschiedenen Varianten weist die Fokussiereinrichtung geeignete optische Elemente, insbesondere Linsen und/oder Spiegel zur Führung und ggf. Fokussierung des Strahls (21) auf.

In der gezeigten Ausführungsform emittiert der Strahl- oder Laserkopf (18) einen einzelnen Strahl (21) mit winkelfester Ausrichtung. In Abwandlung der gezeigten Ausführung kann der Strahl- oder Laserkopf (18) einen schwenkbeweglichen und ggf. oszillierenden oder pendelnden Strahl (21) emittieren. Hierfür kann eine geeignete steuerbare Ablenkeinrichtung, z.B. eine Scanneroptik mit einem oder mehreren beweglichen Spiegeln, an oder in dem besagten Strahl- oder Laserkopf (18) vorhanden sein. In weiterer alternativer oder kombinativer Ausführung kann der besagte Kopf (18) mehrere Strahlen (21) fokussieren, die in geeigneter Weise nebeneinander oder ggf. auch einander schneidend angeordnet sind.

Der Fokus des Strahls (21) kann exakt auf die Fügestelle (11) und ggf. die Auftreffstelle des Strahls (21) am Werkstück (2) gerichtet werden. Es ist aber auch eine gezielte Defokussierung möglich, in der der Fokus vor oder hinter die Fügestelle (11) bzw. Auftreffstelle gelegt wird. Die räumliche Lage des Fokus wird durch die vorerwähnte Zustellbewegung der Handhabungseinrichtung (3) in Richtung der Achsen (14,25) bestimmt.

Die Positioniereinrichtung (5) kann sich am Werkstück (2), insbesondere am hohlen Werkstückteil (8), fixieren. Hierfür kann z.B. das Zentrierelement (31,32) beim Eingriff in das hohle Werkstückteil (8) geklemmt werden. Es ist um die Positionierachse (25) drehbar im Positionierkopf (24) gelagert. Durch eine Drehbewegung des Abtriebselements (15) kann somit das Fügewerkzeug (17) um die Positionierachse (25) und das fixierte Zentrierelement (31,32) rotieren. Der Fügeprozess und die Strahlbewegung können somit von der Handhabungseinrichtung (3) exakt gesteuert werden. Die Umlaufbewegung, insbesondere Drehung, des schräg zur Fügestelle (11) ausgerichteten Fügewerkzeugs (17) kann z.B. 360° betragen. Der Drehwinkel kann je nach Anforderungen an die Fügestelle (11) kleiner oder größer sein. Im gezeigten Ausführungsbeispiel soll die Fügestelle (11) kreisförmig geschlossen sein und eine Dichtschweißung bewirken. Der Drehwinkel kann hierbei gleich oder geringfügig größer als 360° sein.

Wenn in der gezeigten Weise mit einem sehr dünnen Strahl (21) geschweißt wird und an der Fügestelle (11) ein Spalt besteht, kann dieser die Schweißgüte beeinflussen, insbesondere wenn im bevorzugten Ausführungsbeispiel auf eine Zuführung von spaltfüllenden Schweißhilfsmitteln verzichtet wird. Die Positioniereinrichtung (4) kann zur Verbesserung der Schweißgüte eine Verformungseinrichtung (30) für das Werkstück (2) aufweisen, welche durch Verformung einen evtl. Spalt schließt bzw. beseitigt. In der gezeigten Ausführungsform ist die Verformungseinrichtung (30) als Aufweiteinrichtung ausgebildet, die in das hohle Werkstückteil (8) eintaucht und dieses im Mündungsbereich und an der Fügestelle aufweitet, wobei sein Mantel an den Öffnungsrand im anderen Werkstückteil (9) angelegt und angepresst wird.

Das Zentrierelement (31,32) kann ein Bestandteil der Verformungs- oder Aufweiteinrichtung (30) sein und kann neben der Zentrierung und Fixierung auch eine Aufweitfunktion haben. Figur 4 bis 6 zeigen hierzu die Details.

Das Zentrierelement (31) ist hierbei als hohle Spreizkrone (31) und das Zentrierelement (32) als hierin axial und längs der Positionierachse (25) beweglicher Spreizdorn ausgebildet. Die Verformungs- oder Aufweiteinrichtung (30) weist ferner eine Stelleinrichtung (33) auf, die z.B. als pneumatischer oder hydraulischer Zylinder ausgebildet ist, dessen Kolbenstange im gezeigten Ausführungsbeispiel mit dem rückwärtigen Ende des Spreizdorns (32) verbunden ist. Wie Figur 4, 5 und 6 in einem Längsschnitt verdeutlichen, hat die Spreizkrone (31) einen zentralen zylindrischen Hohlraum (34), dessen Längsachse mit der Positionierachse (25) zusammenfällt. Die Spreizkrone (31) hat am vorderen Ende eine konisch zulaufende Formgebung und besitzt ein bewegliches und aufweitbares Kronenende (35). Dieses kann eine zumindest bereichsweise zylindrische und schlanke Mantelkontur aufweisen, die ein Eintauchen der Spreizkrone (31) in den Hohlraum des Werkstückteils (8) ermöglicht. Die Mantelformen können in diesem Bereich aneinander angepasst sein. Das Kronenende (35) weist z.B. einen oder mehrere Längsschlitze für die gewünschte Beweglichkeit auf.

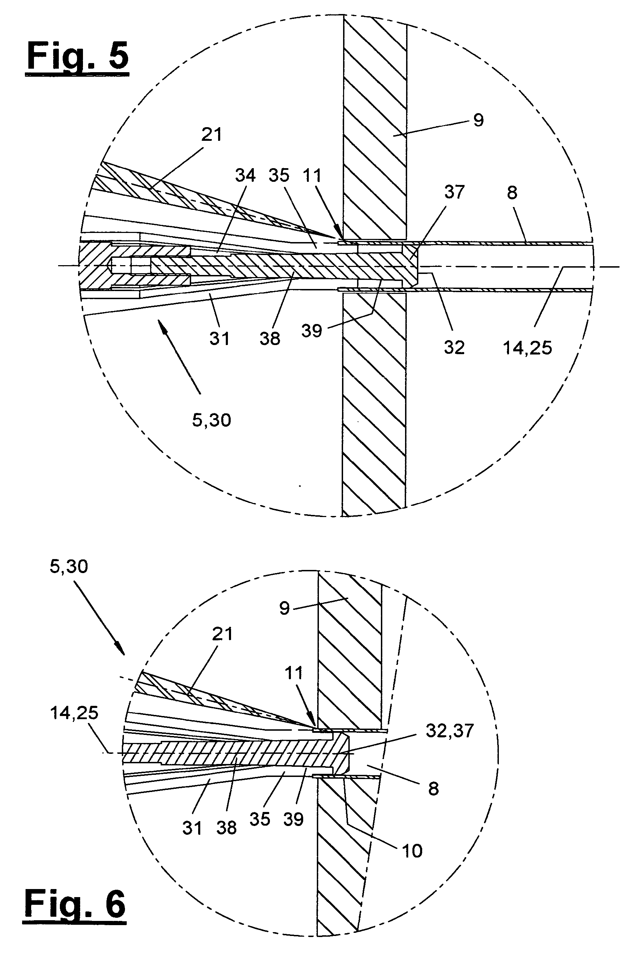

Der Spreizdorn (32) ist gemäß Figur 5 und 6 in der Spreizkrone (31) axial beweglich angeordnet und ggf. auch geführt, wobei er einen länglichen Schaft (38) mit einem verdickten Führungskopf (37) am vorderen Schaftende aufweist. Das hintere Schaftende kann mit der Stelleinrichtung (33) verbunden sein. Gemäß Figur 4 sind die Spreizkrone (31) mittels eines Lagers (36) und der Spreizdorn (32) mittels eines anderen Lagers (40) am Kupplungsbereich zur Stelleinrichtung (33) im Positionierkopf (24) um die Positionierachse (25) frei drehbar gelagert. Im Positionierkopf (24) befindet sich auch die Stelleinrichtung (33), die von der Handhabungseinrichtung (3), insbesondere deren Robotersteuerung, angesteuert werden kann und die den Spreizdorn (32) hebt und senkt.

Der Spreizdorn (32) ragt mit seinem Führungskopf (37) und einem Teil seines Schafts (38) aus dem vorderen Kronenende (35) heraus und taucht bei der Zustellbewegung als erster in das hohle Werkstückteil (8) ein. Der Führungskopf (37) kann hierfür frontseitig eine konische Form mit schrägen Angleitflächen haben. Er besitzt ansonsten einen Mantelbereich, der an die Innenform des Werkstückteils (8) angepasst sein kann und der z.B. eine zylindrische oder prismatische Form aufweist.

Zur Erzielung der Aufweitung und Spannwirkung kann der Schaft (38) am kopfnahmen Bereich einen konischen Spannbereich (39) aufweisen, der sich zum Führungskopf (37) hin erweitert. Der Keilwinkel kann klein sein und kann z.B. ca. 2° betragen. Wenn dieser Spannbereich (39) bei der Rückzugsbewegung des Spreizdorns (32) in das hohle Kronenende (35) eintaucht, wird letzteres geweitet und mit hoher Kraft an den Werkstückmantel angepresst, wodurch dieser geweitet wird. Die Einzugbewegung des Spreizdorns (32) kann durch Anschlag des Führungskopfs (37) an der Frontseite des Kronenendes (35) begrenzt sein.

Wie Figur 5 und 6 verdeutlichen, haben der Führungskopf (37) und das vordere Kronenende (35) eine Querschnittsform, die geringfügig kleiner als die Öffnungsweite des hohlen Werkstückteils (8) ist, sodass sie bei der Positionierung und Zustellung beide in den Werkstückhohlraum eintauchen können. Figur 5 zeigt diese Position. Bei der Zustellung wird außerdem das Fügewerkzeug (17) mit seinem Wirkpunkt in Richtung der Achsen (14,25) positioniert. Der Wirkpunkt wird z.B. an den Öffnungsrand gelegt, der nach der Aufweitung die Fügestelle (11) definiert. Der Wirkpunkt kann der Fokus sein. Alternativ kann auch die vorerwähnte Defokussierung stattfinden.

Nach erfolgter Zustellung wird von der Stelleinrichtung (33) der Spreizdorn (32) in die in Figur 6 gezeigte Position eingezogen, wobei der Spannbereich (39) das Kronenende (35) und die Rohrwandung des Werkstückteils (8) weitet. Figur 6 zeigt diese Aufweitung (10) der Rohrwandung.

In Abwandlung des gezeigten Ausführungsbeispiels gibt es andere Gestaltungs- und Konstruktionsmöglichkeiten für die Aufweitung des Kronenendes (35).

Nach der Verformung oder Aufweitung wird in der vorbeschriebenen Weise das Fügewerkzeug (17) umlaufend bewegt, insbesondere um die Positionierachse (25) gedreht. Dieser Umlauf- oder Drehbewegung folgen die von außen von entsprechenden Versorgungseinheiten zur Fügeeinrichtung (4) herangeführten Versorgungsleitung(en) (23) und Strahlzuführung bzw. Lichtleitkabel (22). Zu deren sicherer und schonender Führung kann die Fügeeinrichtung (4) bzw. die Medienversorgung (7) einen um die Positionierachse (25) gebogenen Leitungsträger (26) aufweisen, der ggf. die Drehbewegung mitmacht. Der Leitungsträger (26) kann die in Figur 1 bis 4 gezeigte trommelartige Formgebung aufweisen. Der Leitungsträger (26) bzw. die Kabeltrommel weist am Mantel getrennte Trägerbereiche (27) für die Strahlzuführung (22) und (28) für die Versorgungsleitung (23) auf, wobei die Leitungen (21,23) z.B. tangential von außen und von entsprechenden Versorgungseinheiten kommend auf den Trommelmantel geleitet werden und diesen mit einem Winkel von 360° oder mehr umschließen. Für die reversierende Drehbewegung kann eine Aufwicklung und eine Umschlingung mit einem Winkel ca. 720° vorhanden sein.

Der Leitungsträger (26) kann einen mit Öffnungen versehenen Trägerboden (29) aufweisen, der z.B. gemäß Figur 4 mittig zum Trommelmantel angeordnet ist und der mit dem Positionierkopf (24) sowie dem Anschluss (16) drehschlüssig verbunden ist. Für eine schonende Umlenkung der Versorgungsleitung(en) (23) kann die Kabeltrommel (26) am rückseitigen Randbereich des Mantels einen ringartigen Kragen mit Unterbrechungen oder anderen Öffnungen aufweisen, durch welche die Versorgungsleitung(en) (23) vom Trommelmantel abgeleitet und in einem belastungsgünstigen Bogen durch die Bodenöffnung zu ein oder mehreren Verbrauchern am Positionierkopf (24), der Verformungseinrichtung (30) und/oder des Fügewerkzeugs (17) geführt und angeschlossen werden.

Wie Figur 3 verdeutlicht, sind die wannenartigen Trägerbereiche (27,28) durch einen Zwischenkragen voneinander getrennt, wobei auch der Trägerbereich (27) für die Strahlzuführung (22) einen randseitigen ringförmigen Kragen mit Unterbrechungen und Leitflügeln aufweist, die ein Herausführen der Strahlzuführung (22) und deren Verlegung in einem weichen Bogen zum Schweißkopf (18) ermöglichen. Eine Leitungsfixierung im Trommelbereich kann mit Schellen oder dgl. erfolgen.

Abwandlungen der gezeigten und beschriebenen Ausführungsformen sind in verschiedener Weise möglich. Die Fügeeinrichtung (4) kann z.B. eine Zuführung für Schutzgas, Kühlmittel oder dgl. aufweisen, die zur Wirkstelle des Fügewerkzeugs (17) oder zu einer anderen Stelle gerichtet ist/sind. Durch eine solche Zuführung kann auch bedarfsweise ein Schweißhilfsmittel der Fügestelle zugeleitet werden. Die Verformungs- oder Aufweiteinrichtung (30) kann bei einer Tolerierung von Spaltbildungen entfallen. Dies gilt insbesondere bei Einsatz anderer Fügewerkzeuge (17), die z.B. als Schweißwerkzeug mit Lichtbogen, als Klebewerkzeug oder dgl. ausgebildet sind. Falls es je nach Werkstückerfordernis nicht auf eine Wichtigkeit der Fügestelle (11) ankommt, kann z.B. auch mit einem Strahl (21) unter Spaltbildung geschweißt oder gelötet werden. Die Verformungs- oder Aufweiteinrichtung (30) kann außerdem in anderer Weise ausgebildet sein, wobei sich die konstruktive Ausbildung auch nach der Art des Werkstücks (2) und seiner Teile (8,9) richtet. Die Verformung kann z.B. eine Quetschung und Kontraktion statt einer Aufweitung sein. Variabel ist auch die konstruktive Ausbildung der Positioniereinrichtung (5) und des Zentrierelements (31,32), insbesondere wenn auf eine Werkstückverformung verzichtet wird. Das Zentrierelement (31,32) kann z.B. als klemmfähiger Zapfen oder dgl. ausgebildet sein. Die Lager (36,40) sind entsprechend angepasst und können auch sonst in ihrer Gestaltung und Anordnung variieren. Abwandelbar ist außerdem die Handhabungseinrichtung (3), die z.B. als Linearachsenroboter oder als anderer und ggf. ohne Programmierung ausgetatter Manipulator ausgebildet sein kann.

Bedeutsam für die Fügetechnik sind insbesondere auch folgende Erfindungsaspekte, die voneinander unabhängig sind, wobei sie sich aber auch miteinander und mit anderer Merkmalen der Erfindung kombinieren lassen.

Die Fügeeinrichtung (4) weist eine Vermessungseinrichtung (6) für eine Werkstückvermessung auf. Die Fügeeinrichtung (4) besitzt eine Medienversorgung (7), insbesondere für die Positioniereinrichtung (5) und das Fügewerkzeug (17), ggf. auch für die Vermessungseinrichtung (6).

Das Fügewerkzeug (17) weist eine Justiereinrichtung (19) zur einstellbaren Montage an der Positioniereinrichtung (5) auf. Das Fügewerkzeug (17) ist bevorzugt als Strahlwerkzeug, insbesondere Laserschweißwerkzeug, ausgebildet. Es besitzt eine Strahlzuführung (22), insbesondere ein Lichtleitkabel. Ein Schweißkopf (18) des Fügewerkzeugs (17) ist bevorzugt als Laserkopf mit einer Fokussiereinrichtung ausgebildet. Ein Schweißkopf (18) weist eine Ankopplung (20) für eine optische Einrichtung, insbesondere eine Kamera, auf.

Bei der Aufweiteinrichtung (30) sind die Spreizkrone (31) und der darin angeordnete Spreizdorn (32) relativ zueinander axial verschieblich. Der Spreizdorn (32) ist mit der Stelleinrichtung (33) verbunden. Der Spreizdorn (32) weist einen Schaft (38) mit einem konischen Spannbereich (39) auf, der mit dem Kronenende (35) zusammenwirkt.

### BEZUGSZEICHENLISTE

- 1: Bearbeitungseinrichtung
- 2: Werkstück, Wärmetauscher
- 3: Handhabungseinrichtung
- 4: Fügeeinrichtung, Schweißeinrichtung
- 5: Positioniereinrichtung
- 6: Vermessungseinrichtung
- 7: Medienversorgung
- 8: Werkstückteil, Rohr
- 9: Werkstückteil, Boden
- 10: Aufweitung
- 11: Fügestelle
- 12: Manipulator, Roboter
- 13: Hand, Roboterhand
- 14: Handachse, Abtriebsachse
- 15: Abtriebselement, Abtriebsflansch
- 16: Anschluss Fügeeinrichtung
- 17: Fügewerkzeug, Schweißwerkzeug, Laserschweißwerkzeug
- 18: Schweißkopf, Laserkopf
- 19: Justiereinrichtung
- 20: Ankoppelung
- 21: Strahl, Laserstrahl
- 22: Strahlzuführung, Lichtleitkabel
- 23: Versorgungsleitung
- 24: Positionierkopf
- 25: Positionierachse, Drehachse
- 26: Leitungsträger, Kabeltrommel
- 27: Trägerbereich für Lichtleitkabel
- 28: Trägerbereich für Medienleitung
- 29: Trägerboden
- 30: Verformungseinrichtung, Aufweiteinrichtung
- 31: Zentriermittel, Spreizkrone
- 32: Zentriermittel, Spreizdorn
- 33: Stelleinrichtung, Zylinder
- 34: Hohlraum
- 35: Kronenende
- 36: Lager, Kronenlager
- 37: Führungskopf
- 38: Schaft
- 39: Spannbereich
- 40: Lager, Dornlager

## Patentansprüche

1. Fügeeinrichtung zum stofflichen Fügen von Werkstücken (2), die ein oder mehrere hohle Werkstückteile (8) aufweisen, **dadurch gekennzeichnet, dass** die Fügeeinrichtung (4) eine am Werkstück (2), insbesondere am hohlen Werkstückteil (8), angreiffähige Positioniereinrichtung (5) mit einer Positionierachse (25) und ein Fügewerkzeug (17) zur Bildung einer stofflichen Fügeverbindung aufweist, wobei das Fügewerkzeug (17) um die Positionierachse (25) bewegbar, insbesondere drehbar ist, wobei die Fügeeinrichtung (4) einen Anschluss (16) zur Verbindung mit einer mehrachsig beweglichen Handhabungseinrichtung (3) aufweist.

2. Fügeeinrichtung nach Anspruch 1, **dadurch gekennzeichnet, dass** die Positionierachse (25) mit der Mittelachse des Anschlusses (16) fluchtet.

3. Fügeeinrichtung nach Anspruch 1 oder 2, **dadurch gekennzeichnet, dass** die Positioniereinrichtung (5) eine Verformungseinrichtung (30) für das Werkstück (2), insbesondere eine Aufweiteinrichtung für ein hohles Werkstückteil (8), aufweist.

4. Fügeeinrichtung nach Anspruch 3, **dadurch gekennzeichnet, dass** die Verformungseinrichtung (30) und das Fügewerkzeug (17) relativ zueinander umlauffähig, insbesondere drehbar gelagert sind.

5. Fügeeinrichtung nach einem der vorhergehenden Ansprüche, **dadurch gekennzeichnet, dass** die Positioniereinrichtung (5), insbesondere deren Verformungseinrichtung (30), am Werkstück (2), insbesondere am hohlen Werkstückteil (8), fixierbar ist.

6. Fügeeinrichtung nach einem der vorhergehenden Ansprüche, **dadurch gekennzeichnet, dass** das Fügewerkzeug (17) als Strahlwerkzeug, insbesondere als Schweißwerkzeug, bevorzugt als Laserschweißwerkzeug, ausgebildet ist.

7. Fügeeinrichtung nach einem der vorhergehenden Ansprüche, **dadurch gekennzeichnet, dass** das Fügewerkzeug (17) einen vorzugsweise schräg zur Positionierachse (25) ausgerichteten Schweißkopf (18), insbesondere einen Strahlkopf, zur Emission eines energiereichen Strahls (21) aufweist.

8. Fügeeinrichtung nach einem der Ansprüche 3, 4 oder 5, **dadurch gekennzeichnet, dass** die Positioniereinrichtung (5) einen Positionierkopf (24) mit dem Anschluss (16) aufweist, an dem die Verformungseinrichtung (30) um die Positionierachse (25) drehbar gelagert ist.

9. Fügeeinrichtung nach einem der vorhergehenden Ansprüche, **dadurch gekennzeichnet, dass** die Fügeeinrichtung (4) einen um die Positionierachse (25) gebogenen, insbesondere trommelartigen, Leitungsträger (26) für ein Lichtleitkabel (22) und eine Versorgungsleitung (23) aufweist, die von extern mit einer Ausrichtung quer oder schräg zur Positionierachse (25) zuleitbar sind.

10. Fügeeinrichtung nach einem der Ansprüche 3, 4 oder 5, **dadurch gekennzeichnet, dass** die Aufweiteinrichtung (30) eine hohle Spreizkrone (31), einen darin relativ beweglich angeordneten Spreizdorn (32) und eine Stelleinrichtung (33) aufweist.

11. Fügeeinrichtung nach Anspruch 10, **dadurch gekennzeichnet, dass** ein aufweitbares Kronenende (35) der Spreizkrone (31) im Außenumfang an ein hohles Werkstückteil (8) angepasst ist, wobei ein aus einer Spreizkrone (31) heraus ragender Spreizdorn (32) einen an ein hohles Werkstückteil (8) angepassten, eintauchfähigen und zentrierenden Führungskopf (37) aufweist.

12. Bearbeitungseinrichtung für Werkstücke (2), die ein oder mehrere hohle Werkstückteile (8) aufweisen, wobei die Bearbeitungseinrichtung (1) eine mehrachsig bewegliche Handhabungseinrichtung (3) mit einer Fügeeinrichtung (4) aufweist, **dadurch gekennzeichnet, dass** die Fügeeinrichtung (4) nach mindestens einem der Ansprüche 1 bis 11 ausgebildet ist.

13. Bearbeitungseinrichtung nach Anspruch 12, **dadurch gekennzeichnet, dass** die Handhabungseinrichtung (3) als Manipulator oder programmierbarer Roboter (12) ausgebildet ist.

14. Bearbeitungseinrichtung nach Anspruch 12 oder 13, **dadurch gekennzeichnet, dass** die Handhabungseinrichtung (3), insbesondere der Manipulator oder programmierbare Roboter (12), ein drehbares Abtriebselement (15) mit einer Abtriebsachse (14) aufweist, an dem die Fügeeinrichtung (4) angeschlossen ist, wobei die Abtriebsachse (14) und die Positionierachse (25) fluchten.

15. Verfahren zum Fügen von Werkstücken (2), welche ein oder mehrere hohle Werkstückteile (8) aufweisen, wobei mittels einer Fügeeinrichtung (4) mit einem Fügewerkzeug (17) eine stofflichen Fügeverbindung hergestellt wird, **dadurch gekennzeichnet, dass** die Fügeeinrichtung (4) mittels eines Anschlusses (16) mit einer mehrachsig beweglichen Handhabungseinrichtung (3) verbunden wird und mittels einer Positioniereinrichtung (5) mit einer Positionierachse (25) am Werkstück (2), insbesondere an einem hohlen Werkstückteil (8), angreifend positioniert wird, wobei das Fügewerkzeug (17) beim Fügen um die Positionierachse (25) bewegt, insbesondere gedreht wird.

## Claims

1. Joining device for materially joining workpieces (2) which have one or more hollow workpiece parts (8), **characterized in that** the joining device (4) has a positioning device (5) that is able to act on the workpiece (2), in particular on the hollow workpiece part (8), and has a positioning axis (25), and a joining tool (17) for forming a material joined connection, wherein the joining tool (17) is movable, in particular rotatable, about the positioning axis (25), wherein the joining device (4) has a connection (16) for connecting to a multi-axially movable handling device (3).

2. Joining device according to Claim 1, **characterized in that** the positioning axis (25) is aligned with the central axis of the connection (16).

3. Joining device according to Claim 1 or 2, **characterized in that** the positioning device (5) has a deformation device (30) for the workpiece (2), in particular an expansion device for a hollow workpiece part (8).

4. Joining device according to Claim 3, **characterized in that** the deformation device (30) and the joining tool (17) are mounted so as to be able to revolve, in particular rotate, relative to one another.

5. Joining device according to one of the preceding claims, **characterized in that** the positioning device (5), in particular the deformation device (30) thereof, is fixable to the workpiece (2), in particular to the hollow workpiece part (8).

6. Joining device according to one of the preceding claims, **characterized in that** the joining tool (17) is configured as a beam tool, in particular as a welding tool, preferably as a laser welding tool.

7. Joining device according to one of the preceding claims, **characterized in that** the joining tool (17) has a welding head (18) that is oriented preferably in an inclined manner with respect to the positioning axis (25), in particular a beam head, for emitting a high-energy beam (21).

8. Joining device according to one of Claims 3, 4 or 5, **characterized in that** the positioning device (5) has a positioning head (24) with the connection (16), on which the deformation device (30) is mounted so as to be rotatable about the positioning axis (25).

9. Joining device according to one of the preceding claims, **characterized in that** the joining device (4) has an in particular drum-like line carrier (26) for an optical cable (22) and a supply line (23), said line carrier (26) being curved about the positioning axis (25), said optical cable (22) and supply line (23) being feedable from the outside with a transverse or inclined orientation with respect to the positioning axis (25).

10. Joining device according to one of Claims 3, 4 or 5, **characterized in that** the expansion device (30) has a hollow spreading tip (31), a spreading mandrel (32) arranged so as to be movable in a relative manner therein, and an adjusting device (33).

11. Joining device according to Claim 10, **characterized in that** an expandable tip end (35) of the spreading tip (31) is adapted in terms of its outer circumference to a hollow workpiece part (8), wherein a spreading mandrel (32) projecting out of the spreading tip (31) has an introducible and centring guide head (37) that is adapted to a hollow workpiece part (8).

12. Machining device for workpieces (2) which have one or more hollow workpiece parts (8), wherein the machining device (1) has a multi-axially movable handling device (3) having a joining device (4), **characterized in that** the joining device (4) is configured according to at least one of Claims 1 to 11.

13. Machining device according to Claim 12, **characterized in that** the handling device (3) is configured as a manipulator or programmable robot (12).

14. Machining device according to Claim 12 or 13, **characterized in that** the handling device (3), in particular the manipulator or programmable robot (12), has a rotatable output element (15) having an output axis (14), the joining device (4) being connected to said output element (15), wherein the output axis (14) and the positioning axis (25) are aligned.

15. Method for joining workpieces (2) which have one or more hollow workpiece parts (8), wherein a material joining connection is established by means of a joining device (4) having a joining tool (17), **characterized in that** the joining device (4) is connected to a multi-axially movable handling device (3) by means of a connection (16), and is positioned in a manner acting on the workpiece (2), in particular on a hollow workpiece part (8), by means of a positioning device (5) having a positioning axis (25), wherein the joining tool (17) is moved, in particular rotated, about the positioning axis (25) during joining.

## Revendications

1. Dispositif d'assemblage pour l'assemblage par liaison de matière de pièces (2) qui présentent une ou plusieurs parties de pièce creuses (8), **caractérisé en ce que** le dispositif d'assemblage (4) présente, au niveau de la pièce (2), en particulier au niveau de la partie de pièce creuse (8), un dispositif de positionnement (5) pouvant être saisi, avec un axe de positionnement (25), et un outil d'assemblage (17) pour former une liaison d'assemblage par liaison de matière, l'outil d'assemblage (17) pouvant être déplacé, en particulier tourné, autour de l'axe de positionnement (25), le dispositif d'assemblage (4) présentant un raccord (16) pour la liaison à un dispositif de manipulation (3) déplaçable suivant plusieurs axes.

2. Dispositif d'assemblage selon la revendication 1, **caractérisé en ce que** l'axe de positionnement (25) est aligné avec l'axe médian du raccord (16).

3. Dispositif d'assemblage selon la revendication 1 ou 2, **caractérisé en ce que** le dispositif de positionnement (5) présente un dispositif de déformation (30) pour la pièce (2), en particulier un dispositif d'élargissement pour une partie de pièce creuse (8).

4. Dispositif d'assemblage selon la revendication 3, **caractérisé en ce que** le dispositif de déformation (30) et l'outil d'assemblage (17) sont supportés de manière à pouvoir tourner l'un par rapport à l'autre, notamment de manière rotative.

5. Dispositif d'assemblage selon l'une quelconque des revendications précédentes, **caractérisé en ce que** le dispositif de positionnement (5), en particulier son dispositif de déformation (30), peut être fixé sur la pièce (2), en particulier sur la partie de pièce creuse (8).

6. Dispositif d'assemblage selon l'une quelconque des revendications précédentes, **caractérisé en ce que** l'outil d'assemblage (17) est réalisé sous forme d'outil de rayonnement, en particulier sous forme d'outil de soudage, de préférence sous forme d'outil de soudage laser.

7. Dispositif d'assemblage selon l'une quelconque des revendications précédentes, **caractérisé en ce que** l'outil d'assemblage (17) présente une tête de soudage (18) de préférence orientée obliquement par rapport à l'axe de positionnement (25), en particulier une tête de rayonnement pour émettre un rayonnement à haute énergie (21).

8. Dispositif d'assemblage selon l'une quelconque des revendications 3, 4 ou 5, **caractérisé en ce que** le dispositif de positionnement (5) présente une tête de positionnement (24) avec le raccord (16) au niveau duquel le dispositif de déformation (30) est supporté de manière à pouvoir tourner autour de l'axe de positionnement (25).

9. Dispositif d'assemblage selon l'une quelconque des revendications précédentes, **caractérisé en ce que** le dispositif d'assemblage (4) présente un support de ligne (26) cintré autour de l'axe de positionnement (25), en particulier en forme de tambour, pour un câble optique (22), et une ligne d'alimentation (23), lesquels peuvent être acheminés depuis l'extérieur avec une orientation transversale ou oblique par rapport à l'axe de positionnement (25).

10. Dispositif d'assemblage selon l'une quelconque des revendications 3, 4 ou 5, **caractérisé en ce que** le dispositif d'élargissement (30) présente une couronne d'écartement creuse (31), un mandrin d'écartement (32) disposé de manière déplaçable à l'intérieur de celle-ci, et un dispositif de réglage (33).

11. Dispositif d'assemblage selon la revendication 10, **caractérisé en ce qu'**une extrémité de couronne pouvant être élargie (35) de la couronne d'écartement (31) est adaptée de par sa périphérie extérieure à une partie de pièce creuse (8), un mandrin d'écartement (32) faisant saillie hors d'une couronne d'écartement (31) présentant une tête de guidage (37) adaptée à une partie de pièce creuse (8), pouvant être enfoncée et servant au centrage.

12. Dispositif d'usinage pour pièces (2) qui présentent une ou plusieurs parties de pièce creuses (8), le dispositif d'usinage (1) présentant un dispositif de manipulation (3) déplaçable suivant plusieurs axes, avec un dispositif d'assemblage (4), **caractérisé en ce que** le dispositif d'assemblage (4) est réalisé selon au moins l'une quelconque des revendications 1 à 11.

13. Dispositif d'usinage selon la revendication 12, **caractérisé en ce que** le dispositif de manipulation (3) est réalisé sous forme de manipulateur ou de robot programmable (12).

14. Dispositif d'usinage selon la revendication 12 ou 13, **caractérisé en ce que** le dispositif de manipulation (3), en particulier le manipulateur ou le robot programmable (12), présente un élément de prise de force rotatif (15) avec un axe de prise de force (14) au niveau duquel est raccordé le dispositif d'assemblage (4), l'axe de prise de force (14) et l'axe de positionnement (25) étant alignés.

15. Procédé d'assemblage de pièces (2) qui présentent une ou plusieurs parties de pièce creuses (8), une liaison d'assemblage par liaison de matière étant établie au moyen d'un dispositif d'assemblage (4) avec un outil d'assemblage (17), **caractérisé en ce que** le dispositif d'assemblage (4) est connecté au moyen d'un raccord (16) à un dispositif de manipulation (3) déplaçable suivant plusieurs axes et est positionné au moyen d'un dispositif de positionnement (5) avec un axe de positionnement (25) de manière à s'engager avec la pièce (2), en particulier avec une partie de pièce creuse (8), l'outil d'assemblage (17) se déplaçant autour de l'axe de positionnement (25), en particulier étant tourné autour de celui-ci lors de l'assemblage.
